# EUROPÄISCHE PATENTSCHRIFT

(11) **EP 3 455 270 B1**
(45) Veröffentlichungstag und Bekanntmachung des Hinweises auf die Patenterteilung: **29.04.2020**
(21) Anmeldenummer: 17719634.2
(22) Anmeldetag: 02.05.2017
(51) Int. Cl.: C08G 18/48, C08G 18/12, C08G 18/18, C08G 18/20, C08G 18/76, C08G 101/00

(54) **KLEBEFREIER POLYURETHANWEICHSCHAUMSTOFF**
FLEXIBLE POLYURETHANE FOAM
MOUSSE POLYURETHANE SOUPLE NON-ADHESIVE

(30) Priorität: 12.05.2016 EP 16169387
(43) Veröffentlichungstag der Anmeldung: 20.03.2019
(73) Patentinhaber: BASF SE, 67056 Ludwigshafen am Rhein (DE)
(72) Erfinder: LUTTER, Heinz-Dieter, 49448 Lemfoerde (DE); FAEHMEL, Manuela, 49448 Lemfoerde (DE); SIMON, Kirsten, 49448 Lemfoerde (DE); PETRINI, Claudio, 14019 Villanova d'Asti AT (IT)
(74) Vertreter: BASF IP Association
(86) Internationale Anmeldenummer: PCT/EP2017/060324
(87) Internationale Veröffentlichungsnummer: WO 2017/194340

(56) Entgegenhaltungen:
- DE-A1-102004 047 406

## Beschreibung

Die vorliegende Erfindung betrifft Verfahren zur Herstellung von Polyurethanweichschaumstoffen bei dem man (a) Polyisocyanatprepolymer mit (b) polymeren Verbindungen mit gegenüber Isocyanaten reaktiven Gruppen, (c) gegebenenfalls Kettenverlängerungs- und/oder Vernetzungsmittel, (d) Katalysator, (e) Treibmittel, enthaltend Wasser sowie (f) gegebenenfalls Zusatzstoffen, zu einer Reaktionsmischung vermischt und zum Polyurethanweichschaumstoff umsetzt, wobei die Polyisocyanatprepolymere (a) einen NCO-Gehalt von 16 bis 30 Gew.-%, bezogen auf das Gesamtgewicht der Komponente a), aufweist und erhältlich sind durch Umsetzen von (a1) Diphenylmethandiisocyanat, enthaltend (a1a) 2,4' Diphenylmethandiisocyanat, (a1b) 4,4'-Diphenylmethandiisocyanat und (a1c) höherkernigen Homologen des Diphenylmethandiisocyanats, mit (a2) Polyolen, enthaltend (a2a) ethylenoxidreiches Polyalkylenoxid mit einer Hydroxylzahl von 20 bis 60 mg KOH/g, ausgehend von einem oder mehreren 2 bis 4 funktionalen Startermolekülen und einem Anteil von Ethylenoxideinheiten, bezogen auf das Gesamtgewicht an Alkylenoxideinheiten, von mindestens 55 (65, 70) Gew.-% und (a2b) ethylenoxidarmes Polyalkylenoxid mit einer Hydroxylzahl von 20 bis 60 mg KOH/g, ausgehend von einem oder mehreren 2 bis 4 funktionalen Startermolekülen und einem Anteil von Ethylenoxideinheiten, bezogen auf das Gesamtgewicht an Alkylenoxideinheiten, von höchstens 20 Gew.-%, und wobei der Anteil von (a1a) 2,4'-Diphenylmethandiisocyanat 5 bis 15 Gew.-% und von (a1b) 4,4'-Diphenylmethandiisocyanat 40 bis 80 Gew.-%, bezogen auf das Gesamtgewicht der Polyisocyanate (a1), beträgt und die polymeren Verbindungen mit gegenüber Isocyanaten reaktiven Gruppen (b) (b1) 60 bis 80 Gew.-% mindestens eines Polyalkylenoxids mit einer Hydroxylzahl von 20 bis 60 mg KOH/g, ausgehend von einem oder mehreren 2 bis 4 funktionalen Startermolekülen und einem Anteil von Ethylenoxideinheiten, bezogen auf das Gesamtgewicht an Alkylenoxideinheiten, von mindestens 55 bis 95 Gew.-%, (b2) 20 bis 30 Gew.-% mindestens eines Polyalkylenoxids mit einer Hydroxylzahl von 20 bis 80 mgKOH/g, ausgehend von einem oder mehreren 2 bis 4-funktionellen Startermolekülen und einem Anteil von Ethylenoxideinheiten, bezogen auf das Gesamtgewicht an Alkylenoxideinheiten, von 0 bis 40 Gew.-% enthalten und wobei der Anteil der Verbindungen (b1) und (b2), bezogen auf das Gesamtgewicht der polymeren Verbindungen mit gegenüber Isocyanaten reaktiven Gruppen (b), mindestens 80 Gew.-% beträgt. Weiter betrifft die vorliegende Erfindung einen klebefreien Polyurethanweichschaumstoff, erhältlich nach einem solchen Verfahren.

Polyurethanweichschaumstoffe sind bekannt und werden zur Herstellung von Matratzen, Polsterungen bei Möbeln, wie Stühlen, Sofas und Sesseln sowie im Automobilbereich, beispielsweise bei der Herstellung von Autositzen eingesetzt. Eine weitere, wichtige Einsatzmöglichkeit von Polyurethanweichschaumstoffen ist die Herstellung von Kissen. Diese erfolgt üblicherweise in einer Form, wobei die Ausgangsmaterialien zur Herstellung des Polyurethanweichschaumstoffs vermischt und in eine Form gegeben werden. Dadurch wird ein Weichschaumstoff erhalten, dessen Oberfläche von einer im Wesentlichen nicht zelligen Polyurethanhaut bedeckt ist.

Problematisch an bekannten Polyurethanweichschaumstoffen, insbesondere an Polyurethanformweichschaumstoffen ist, dass deren Oberfläche oft klebrig ist. Dieses Phänomen tritt insbesondere bei besonders weichen Polyurethanschaumstoffen mit Eindruckhärten nach DIN EN ISO 2439, Verfahren A, von kleiner 70N und bei einem Isocyanatindex von kleiner 100 auf und führt zu Nachteilen bei der Verbraucherakzeptanz und der Arbeitsplatzhygiene.

DE 10105559 offenbart niedrigdichte hydrophile Polyurethanweichschaumstoffe, die aus mindestens einem Polyol eines mindestens zweifunktionellem Polyols auf der Basis von Propylenoxid mit einem EO-Gehalt von größer 40 Gew-%bezogen auf die eingesetzte Gesamtmenge an Alkylenoxid und einem Gehalt an primären OH-Gruppen größer 20 % und einer OH-Zahl von 20-120 mg KOH/g aufweisen und mindestens einem weiteren Polyol auf der Basis von Propylenoxid und gegebenenfalls Ethylenoxid mit einer Funktionalität von mindestens 2 und einem EO Gehalt von maximal 40 Gew-% mit einer OH-Zahl von größer 25 mg KOH/g. Als Isocyanate werden vorzugsweise TDI und / oder Gemische aus MDI mit 2,4'-MDI Isomerenanteil von mehr als 30 Gew.-% eingesetzt. Die nach DE 10105559 erhältlichen Schaumstoffe sind klebrig.

Aufgabe der vorliegenden Erfindung war es, klebefreie Polyurethanweichschaumstoffe, vorzugsweise Formschaumstoffe, insbesondere solche mit Eindruckhärten nach DIN EN ISO 2439, Verfahren A, von kleiner 70N zu liefern.

Die Aufgabe der vorliegenden Erfindung konnte überraschenderweise gelöst werden durch Verfahren zur Herstellung von Polyurethanweichschaumstoffen bei dem man (a) Polyisocyanatprepolymer mit (b) polymeren Verbindungen mit gegenüber Isocyanaten reaktiven Gruppen, (c) gegebenenfalls Kettenverlängerungs- und/oder Vernetzungsmittel, (d) Katalysator, (e) Treibmittel, enthaltend Wasser sowie (f) gegebenenfalls Zusatzstoffen, zu einer Reaktionsmischung vermischt und zum Polyurethanweichschaumstoff umsetzt, wobei die Polyisocyanatprepolymere (a) einen NCO-Gehalt von 16 bis 30 Gew.-%, bezogen auf das Gesamtgewicht der Komponente a), aufweist und erhältlich sind durch Umsetzen von (a1) Diphenylmethandiisocyanat, enthaltend (a1a) 2,4' Diphenylmethandiisocyanat, (a1b) 4,4'-Dipehenylmethandiisocyanat und (a1c) höherkernigen Homologen des Diphenylmethandiisocyanats, mit (a2) Polyolen, enthaltend (a2a) ethylenoxidreiches Polyalkylenoxid mit einer Hydroxylzahl von 20 bis 60 mg KOH/g, ausgehend von einem oder mehreren 2 bis 4 funktionalen Startermolekülen und einem Anteil von Ethylenoxideinheiten, bezogen auf das Gesamtgewicht an Alkylenoxideinheiten, von mindestens 55 Gew.-% und (a2b) ethylenoxidarmes Polyalkylenoxid mit einer Hydroxylzahl von 20 bis 60 mg KOH/g, ausgehend von einem oder mehreren 2 bis 4 funktionalen Startermolekülen und einem Anteil von Ethylenoxideinheiten, bezogen auf das Gesamtgewicht an Alkylenoxideinheiten, von höchstens 10 Gew.-%, und wobei der Anteil von (a1a) 2,4'-Diphenylmethandiisocyanat 5 bis 15 Gew.-% und von (a1b) 4,4'-Diphenylmethandiisocyanat 40 bis 80 Gew.-%, bezogen auf das Gesamtgewicht der Polyisocyanate (a1), beträgt und die polymeren Verbindungen mit gegenüber Isocyanaten reaktiven Gruppen (b) (b1) 60 bis 80 Gew.-% mindestens eines Polyalkylenoxids mit einer Hydroxylzahl von 20 bis 60 mg KOH/g, ausgehend von einem oder mehreren 2 bis 4 funktionalen Startermolekülen und einem Anteil von Ethylenoxideinheiten, bezogen auf das Gesamtgewicht an Alkylenoxideinheiten, von mindestens 55 bis 95 Gew.-%, (b2) 20 bis 30 Gew.-% mindestens eines Polyalkylenoxids mit einer Hydroxylzahl von 20 bis 80 mgKOH/g, ausgehend von einem oder mehreren 2 bis 4-funktionellen Startermolekülen und einem Anteil von Ethylenoxideinheiten, bezogen auf das Gesamtgewicht an Alkylenoxideinheiten, von 0 bis 40 Gew.-% enthalten und wobei der Anteil der Verbindungen (b1) und (b2), bezogen auf das Gesamtgewicht der polymeren Verbindungen mit gegenüber Isocyanaten reaktiven Gruppen (b), mindestens 80 Gew.-% beträgt. Weiter umfasst die vorliegende Erfindung einen klebefreien Polyurethanweichschaumstoff, erhältlich nach einem solchen Verfahren.

Als erfindungsgemäßer Polyurethanweichschaumstoff wird dabei ein Polyurethanschaumstoff mit einer Dichte von kleiner als 100 g/l, vorzugsweise 20 bis 70 g/l, besonders bevorzugt 30 bis 60 g/l und insbesondere 40 bis 55 g/l. Weiter weisen die klebefreien Polyurethanschaumstoffe gemäß der vorliegenden Erfindung vorzugsweise eine Eindruckhärte nach DIN EN ISO 2439, Verfahren A, von weniger als 100 N, besonders bevorzugt weniger als 80 N, mehr bevorzugt weniger als 70 N und insbesondere weniger als 60 N auf. Vorzugsweise ist der Druckverformungsrest, gemessen bei 70°C, 50% Stauchung über 22 Stunden nach DIN EN ISO 1856, kleiner 20 %, besonders bevorzugt kleiner 15 %, mehr bevorzugt kleiner 10 % und insbesondere kleiner 5 %.

Vorzugsweise beträgt der Druckverformungsrest eines erfindungsgemäßen Polyurethanweichschaumstoffs nach 22 Stunden Stauchung bei 70 °C um 90% in Anlehnung an die DIN EN ISO 1856 weniger als 20 %, besonders bevorzugt weniger als 10 % und insbesondere weniger als 5 %.

In einer bevorzugten Ausführungsform handelt es sich bei den erfindungsgemäßen Polyurethanweichschaumstoff um einen viskoelastischen Polyurethanweichschaumstoff. Viskoelastische Polyurethanweichschaumstoffe zeichnen sich durch einen absoluten Maximalwert des Verlustmoduls tan delta im Temperaturbereich von -10 bis 40°C, vorzugsweise 0 bis 35°C, besonders bevorzugt 10 bis 35 und insbesondere 15 bis 30 °C aus. Dabei entspricht der absolute Maximalwert des Verlustmoduls tan delta der Glastemperatur nach ASTM D 4065-99. Weiter weisen die erfindungsgemäßen viskoelastischen Polyurethanschaumstoffe eine Rückprallelastizitat nach DIN EN ISO 8307 von unter 20 % sowie ein hohes Dämpfungsverhalten auf, welches sich durch einen Wert für tan delta bei 20 °C von mindestens 0.2, vorzugsweise mindestens 0,4 und besonders bevorzugt mindestens 0,5 ausdrückt. Dabei wird der tan delta mittels dynamisch-mechanischer Analyse (DMA) bei einer Frequenz von 1 Hz und einem Temperaturbereich von - 80 bis + 200°C bei einer Deformation von 0,3 % in Anlehnung an DIN EN ISO 6721-1, DIN EN ISO 6721-2, DIN EN ISO 6721-7 bestimmt. Das Temperaturprogramm wird in 5°C-Schritten durchgeführt.

Als Polyisocyanatprepolymere (a) werden dabei solche Prepolymere eingesetzt, die einen NCO-Gehalt von 16 bis 30 Gew.-%, bezogen auf das Gesamtgewicht der Komponente a), aufweisen und die erhältlich sind durch Umsetzen von (a1) Diphenylmethandiisocyanat, enthaltend (a1a) 2,4' Diphenylmethandiisocyanat, (a1b) 4,4'-Dipehenylmethandiisocyanat und (a1c) höherkernigen Homologen des Diphenylmethandiisocyanats, mit (a2) Polyolen.

Dabei beträgt der Anteil von (a1a) 2,4'-Diphenylmethandiisocyanat 5 bis 15 Gew.-% und von (a1b) 4,4'-Diphenylmethandiisocyanat 40 bis 80 Gew.-%, jeweils bezogen auf das Gesamtgewicht der Polyisocyanate (a1). In einer bevorzugten Ausführungsform beträgt der Anteil von höherkernigen Homologen des Diphenylmethandiisocyanats (a1c) 3 bis 30 Gew.-%, vorzugsweise 5 bis 25 Gew.-%. Vorzugsweise werden zur Herstellung der Polyisocyanatprepolymere neben den Isocyanaten (a1a), (a1b) und (a1c) weniger als 20 Gew.-%, und besonders bevorzugt weniger als 10 Gew.-%, mehr bevorzugt weniger als 1 Gew.-% und insbesondere keine weiteren Isocyanate zur Herstellung des Prepolymers (a) eingesetzt. Weitere Isocyanate umfassen alle in der Polyurethanchemie üblichen Isocyanate mit Ausnahme der Isocyanate (a1a), (a1b) und (a1c), wie aliphatische Isocyanate, weitere aromatische Isocyanate oder modifizierte Isocyanate, wie Isocyanate, die durch Einbau von Gruppen, ausgehend von Isocyanatgruppen, in denen Polyisocyanate entstehen. Beispiele für derartige Gruppen sind Allophanat-, Carbodiimid-, Uretonimin-, Isocyanurat-, Harnstoff- und Biuretgruppen.

Die Isocyanate (a1) werden mit Polyolen (a2) zum Isocyanatprepolymer umgesetzt. Dabei enthalten die Polyole (a2) ethylenoxidreiches Polyalkylenoxid (a2a) mit einer Hydroxylzahl von 20 bis 60 mg KOH/g, ausgehend von einem oder mehreren 2 bis 4 funktionalen Startermolekülen und einem Anteil von Ethylenoxideinheiten, bezogen auf das Gesamtgewicht an Alkylenoxideinheiten, von mindestens 55 Gew.-%, vorzugsweise mindestens 65 Gew.-% und besonders bevorzugt mindestens 75 Gew.-%, und ethylenoxidarmes Polyalkylenoxid (a2b) mit einer Hydroxylzahl von 20 bis 60 mg KOH/g, ausgehend von einem oder mehreren 2 bis 4 funktionalen Startermolekülen und einem Anteil von Ethylenoxideinheiten, bezogen auf das Gesamtgewicht an Alkylenoxideinheiten, von höchstens 20, vorzugsweise höchstens 10, besonders bevorzugt höchstens 5 und insbesondere 0 Gew.-%. Der maximale Anteil an Ethylenoxideinheiten im Polyol (a2a), bezogen auf das Gesamtgewicht an Alkylenoxideinheiten im Polyol (a2a) vorzugsweise weniger als 90 Gew.-%, besonders bevorzugt weniger als 85 Gew.-% und insbesondere weniger als 80 Gew.-%. In einer besonders bevorzugten Ausführungsform beträgt der Anteil an Ethylenoxideinheiten im Polyol (a2a), bezogen auf das Gesamtgewicht an Alkylenoxideinheiten im Polyol (a2a) 65 bis 90 Gew.-%.

Das Polyol (a2b) enthält vorzugsweise 2 bis 20 Gew.-%, besonders bevorzugt 5 bis 15 Gew.-% Ethylenoxideinheiten, bezogen auf das Gesamtgewicht an Alkylenoxideinheiten im Polyol (a2b).

Vorzugsweise beträgt dabei der Anteil von ethylenoxidreichem Polyalkylenoxyd (a2a) 4 bis 8 Gew.-% und der Anteil von ethylenoxidarmem Polyalkenlenoxid (a2b) 10 bis 16 Gew.-%, jeweils bezogen auf das Gesamtgewicht des Isocyanatprepolymers a).

In einer weiteren bevorzugten Ausführungsform weist das Polyalkylenoxid (a2a) einen Anteil an primären OH-Gruppen von 60 bis 100 %, besonders bevorzugt 70 bis 90% und insbesondere 70 bis 80 %, bezogen auf die Gesamtzahl der OH-Gruppen des Polyalkylenoxids (a2a), und das Polyalkylenoxid (a2b) einen Anteil an primären OH-Gruppen von 30 bis 0 %, besonders bevorzugt 20 bis 0 % und insbesondere 10 bis 0 %, bezogen auf die Gesamtzahl der OH-Gruppen des Polyalkylenoxids (a2b) auf.

Vorzugsweise enthalten die Polyole (a2) neben den beschriebenen Polyolen (a2a) und (a2b) weniger als 20 Gew.-%, und vorzugsweise weniger als 10 Gew.-% weitere Polyole, bezogen auf das Gesamtgewicht der Polyole (a2). Insbesondere enthalten die Polyole neben den Polyolen (a2a) und (a2a) keine weiteren Polyole. Weitere Polyole umfassen alle üblichen, in der Polyurethanchemie eingesetzten Polyole. Diese umfassen die unter (b) beschriebenen polymeren Verbindungen mit gegenüber Isocyanaten reaktiven Gruppen sowie die unter (c) beschriebenen Kettenverlängerungs- und Vernetzungsmittel. Vorzugsweise werden zur Herstellung der Isocyanatprepolymere (a) keine Kettenverlängerungsmittel und/oder Vernetzungsmittel eingesetzt.

Die Polyole (a2) sind allgemein bekannt und kommerziell erhältlich. Deren Herstellung wird bei der Beschreibung der Polyole b) mit beschrieben. Als Startermoleküle können alle bekannten und unter (b) beschriebenen Starter mit der entsprechenden Funktionalität eingesetzt werden. Vorzugsweise werden als Starter di- und trifunktionelle Starter, wie Ethylenglycol, Wasser, Glycerin oder Trimethylolpropan, eingesetzt.

Zur Herstellung des Isocyanatprepolymers (a) werden die Einsatzstoffe Diphenylmethandiisocyanat (a1) und Polyol (a2) vermischt. Dies geschieht dies in einem Verhältnis, dass der NCO-Gehalt des Prepolymers 16 bis 30 Gew.-%, vorzugsweise 20 bis 28 Gew.-% beträgt. Bevorzugt wird die Mischung auf Temperaturen von 30 bis 100 °C, vorzugsweise etwa 80 °C erwärmt.

Als polymere Verbindungen mit gegenüber Isocyanat reaktiven Gruppen (b) kommen bevorzugt Polyetheralkohole mit einer Funktionalität von 2 bis 8, vorzugsweise von 2 bis 6, besonders bevorzugt von 2 bis 4 und einem mittleren Equivalentmolekulargewicht im Bereich von 400 bis 8000 g/mol, vorzugsweise 1000 bis 5000 g/mol und besonders bevorzugt 3000 bis 4000 g/mol, in Betracht. Insbesondere werden ausschließlich Polyetheralkohole als polymere Verbindungen mit gegenüber Isocyanat reaktiven Gruppen (b) eingesetzt.

Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Bei Anlagerung von Alkylenoxyden spricht man auch von Polyalkylenoxydpolyolen. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Weichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Wenn der Gehalt an ungesättigten Bestandteilen in den Polyetheralkoholen gering sein soll, können als Katalysatoren auch Di- oder Multimetallcyanidverbindungen, sogenannte DMC-Katalysatoren, eingesetzt werden. Zur Herstellung von hochelastischen Polyurethanweichschaumstoffen werden insbesondere zwei- und/oder dreifunktionelle Polyalkylenoxydpolyole eingesetzt.

Weiter können als Verbindung mit mindestens zwei aktiven Wasserstoffatomen Polyesterpolyole, beispielsweise herstellbar aus organischen Dicarbonsäuren mit 2 bis 12 Kohlenstoffatomen, vorzugsweise aliphatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen, eingesetzt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und die isomeren Naphthalindicarbonsäuren. Vorzugsweise wird Adipinsäure eingesetzt. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden.

Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure und Hydroxybenzoesäuren. Vorzugsweise eingesetzt wird Dipropylenglykol.
Die Hydroxylzahl der Polyesteralkohole liegt vorzugsweise im Bereich zwischen 40 und 100 mg KOH/g.

Als Polyole eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Bei einem polymermodifizierten Polyol handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist.

Polymerpolyole sind beispielsweise in EP-A-250 351, DE 111 394, US 3 304 273, US 3 383 351, US 3 523 093, DE 1 152 536 und DE 1 152 537 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyol, bevorzugt Polyesterol oder Polyetherol, hergestellt. Die Seitenketten entstehen im Allgemeinen durch Übertragung der Radikale von wachsenden Polymerketten auf Polyole. Das Polymer-Polyol enthält neben den Propfcopolymerisaten überwiegend die Homopolymere der Olefine, dispergiert in unverändertem Polyol.

In einer bevorzugten Ausführungsform werden als Monomere Acrylnitril, Styrol, insbesondere ausschließlich Styrol verwendet. Die Monomere werden gegebenenfalls in Gegenwart weiterer Monomerer, eines Makromers, eines Moderators und unter Einsatz eines Radikal-Initiators, meist Azo- oder Peroxidverbindungen, in einem Polyesterol oder Polyetherol als kontinuierlicher Phase polymerisiert.

Ist in der höhermolekularen Verbindung b) Polymerpolyol enthalten, liegt dies vorzugsweise zusammen mit weiteren Polyolen vor, beispielsweise Polyetherolen, Polyesterolen oder Mischungen aus Polyetherolen und Polyesterolen. Vorzugsweise wird kein Polymerpolyol eingesetzt.

Die Polymeren Verbindungen mit gegenüber Isocyanat reaktiven Gruppen enthalten 60 bis 80 Gew.-%, vorzugsweise 65 bis 75 Gew.-%, bezogen auf das Gesamtgewicht der Komponente (b), mindestens ein Polyalkylenoxids (b1) mit einer Hydroxylzahl von 20 bis 60 mg KOH/g, vorzugsweise 25 bis 55 mg KOH/g und besonders bevorzugt 30 bis 50 mg KOH/g, ausgehend von einem oder mehreren 2 bis 4 funktionalen Startermolekülen und einem Anteil von Ethylenoxideinheiten, bezogen auf das Gesamtgewicht an Alkylenoxideinheiten, von 55 bis 95 Gew.-%, vorzugsweise 60 bis 90 Gew.-% und insbesondere 70 bis 80 Gew.-%, und 20 bis 30 Gew.-% mindestens eines Polyalkylenoxids (b2) mit einer Hydroxylzahl von 20 bis 80 mg KOH/g, vorzugsweise 30 bis 60 mg KOH/g, ausgehend von einem oder mehreren 2 bis 4-funktionellen Startermolekülen und einem Anteil von Ethylenoxideinheiten, bezogen auf das Gesamtgewicht an Alkylenoxideinheiten, von 0 bis 40 Gew.-%, vorzugsweise 2 bis 40 Gew.-%, besonders bevorzugt 3 bis 30 Gew.-% und insbesondere 5 bis 20 Gew.-%. Dabei beträgt der Anteil der Verbindungen b1) und b2), bezogen auf das Gesamtgewicht der die polymeren Verbindungen mit gegenüber Isocyanaten reaktiven Gruppen (b), mindestens 80 Gew.-%, vorzugsweise 85 bis 100 Gew.-% und insbesondere 100 Gew.-%.

Dabei weist das Polyalkylenoxid (b1) vorzugsweise einen Anteil an primären OH-Gruppen von 60 bis 100 %, besonders bevorzugt 70 bis 90% und insbesondere 70 bis 80 %, bezogen auf die Gesamtzahl der OH-Gruppen des Polyalkylenoxids b1), und das Polyalkylenoxid b2) einen Anteil an primären OH-Gruppen von 30 bis 0%, vorzugsweise 20 bis 0 % und insbesondere 0 %, bezogen auf die Gesamtzahl der OH-Gruppen des Polyalkylenoxids b2), auf.

Als Kettenverlängerungsmittel und/oder Vernetzungsmittel (c) werden Substanzen mit einem Molekulargewicht von kleiner 500 g/mol, bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, o-, m-, p-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (d) Monoethylenglycol, 1,4-Butandiol und/oder Glycerin eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) und (d) zum Einsatz.

Als Katalysatoren (d) zur Herstellung der hochelastischen Polyurethanschaumstoffe werden bevorzugt Verbindungen verwendet, welche die Reaktion der Hydroxylgruppen enthaltenden Verbindungen der Komponente (b), und gegebenenfalls (d) mit den Polyisocyanatprepolymeren (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismutoctanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.%, insbesondere 0,05 bis 2 Gew.% Katalysator bzw. Katalysatorkombination, bezogen auf das Gewicht der Komponente (b).

Ferner sind bei der Herstellung von Polyurethanschaumstoffen Treibmittel (e), enthaltend Wasser, zugegen. Als Treibmittel (e) können neben Wasser weitere chemisch wirkende Treibmittel und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, Fluorkohlenwasserstoffe, wie Solkane® 365 mfc, oder Gase, wie Kohlendioxid. In einer bevorzugten Ausführungsform wird als Treibmittel eine Mischung dieser Treibmittel, enthaltend Wasser, besonders bevorzugt ausschließlich Wasser, eingesetzt.

Der Gehalt an physikalischen Treibmitteln (e) liegt in einer bevorzugten Ausführungsform im Bereich zwischen 1 und 20 Gew.-%, insbesondere 5 und 20 Gew.-%, die Menge an Wasser vorzugsweise im Bereich zwischen 0,5 und 10 Gew.-%, insbesondere 1 und 5 Gew.-%.

Als Hilfsmittel und/oder Zusatzstoffe (f) werden beispielsweise oberflächenaktive Substanzen, Schaumstabilisatoren, Zellregler, äußere und innere Trennmittel, Füllstoffe, Pigmente, Hydrolyseschutzmittel sowie fungistatisch und bakteristatisch wirkende Substanzen eingesetzt.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993, Kapitel 5, Polyurethanweichschaumstoffe
Bei der technischen Herstellung von Polyurethan-Schaumstoffen ist es üblich, die Verbindungen mit mindestens zwei aktiven Wasserstoffatomen b) und ein oder mehrere der Einsatzstoffe c) bis f), vor der Umsetzung mit dem Isocyanatprepolymer (a) zu einer sogenannten Polyolkomponente zu vereinigen.

Zur Herstellung der erfindungsgemäßen Polyurethanschaumstoffe werden die Polyisocyanatprepolymere mit den polymeren Verbindungen mit gegenüber Isocyanaten reaktiven Gruppen im Beisein der genannten Treibmittel, Katalysatoren und Hilfs- und/oder Zusatzstoffe zur Reaktion gebracht. Dabei werden die Mischungsverhältnisse so gewählt, dass das Äquivalenz-Verhältnis von NCO-Gruppen der Polyisocyanate (a) zur Summe der reaktiven Wasserstoffatome der Komponenten (b) und gegebenenfalls (c) und (f) 0,5 bis 1,25:1, vorzugsweise 0,55 bis 1,05:1, mehr bevorzugt 0,60 bis 0,95:1 und besonders bevorzugt 0,65 bis 0,85:1 beträgt. Ein Verhältnis von 1:1 entspricht dabei einem Isocyanatindex von 100.

Die Herstellung der erfindungsgemäßen Polyurethan-Schaumstoffe erfolgt vorzugsweise nach dem one-shot-Verfahren, beispielsweise mit Hilfe der Hochdruck- oder Niederdrucktechnik. Die Schaumstoffe können durch das kontinuierliche Auftragen des Reaktionsgemisches auf Bandstraßen zur Erzeugung von Schaumblöcken oder vorzugsweise in offenen oder geschlossenen, beispielsweise metallischen Formwerkzeugen hergestellt werden.

Besonders vorteilhaft ist es, nach dem sogenannten Zweikomponentenverfahren zu verfahren, bei dem, wie oben ausgeführt, eine Polyolkomponente hergestellt und mit Polyisocyanat a) verschäumt wird. Die Komponenten werden vorzugsweise bei einer Temperatur im Bereich zwischen 15 bis 120 °C, vorzugsweise 20 bis 80 °C vermischt und in das Formwerkzeug beziehungsweise auf die Bandstraße gebracht. Die Temperatur im Formwerkzeug liegt zumeist im Bereich zwischen 15 und 120 °C, vorzugsweise zwischen 30 und 80 °C.

Dabei werden Treibmittelmenge und Größe des Formwerkzeugs vorzugsweise so gewählt, dass der erfindungsgemäße Polyurethanweichschaumstoff eine Dichte von 20 bis 70 g/L (besonders bevorzugt 30 bis 60 g/L und insbesondere 40 bis 55 g/L aufweist. Erfindungsgemäße Polyurethanweichschaumstoffe werden vorzugsweise so eingestellt, dass diese eine Eindruckhärte bei 40 % Stauchung, gemessen nach Din EN ISO 2439, Verfahren A, von kleiner 100 N, besonders bevorzugt kleiner 80 N und insbesondere kleiner70 N aufweist. Dies kann beispielsweise über den Vernetzungsgrad erfolgen, welcher durch die Funktionalität der Komponenten (a) und (b) oder den Gehalt an Vernetzungsmittel beeinflusst wird. Weiter führt ein höherer Anteil an Kettenverlängerungsmittel zu härteren Schaumstoffen. Maßnahmen zur Einstellung der Härte sind dem Fachmann bekannt und beispielsweise im Kunststoffhandbuch, Band 7, Polyurethane, herausgegeben von Günter Oertel, Carl-Hanser-Verlag, München, 3. Auflage 1993, Kapitel 5, Polyurethanweichschaumstoffe beschrieben.

Ein weiterer Gegenstand der vorliegenden Erfindung ist ein Polyurethanweichschaumstoff, erhältlich nach einem Verfahren gemäß einem erfindungsgemäßen Verfahren.
Ein weiteres Problem von Polyurethanschaumstoffen ist das Auftreten von aromatischen Aminen an deren Oberfläche. Überraschenderweise zeigen die erfindungsgemäßen Polyurethanschaumstoffe neben einer geringen Klebrigkeit einen geringen extrahierbaren Gehalt an aromatischen Aminen. Dieser der extrahierbare Gehalt an aromatischen Aminen wird anhand eines Probekörper aus der Oberfläche mit 3 cm x 3 cm und 0,5 cm Dicke in 50 ml Essigsäure wie in den Beispielen beschrieben bestimmt und ist kleiner als 3 ppm, vorzugsweise kleiner als 2 ppm und insbesondere kleiner als 1 ppm.

Im Folgenden soll der Gegenstand der Erfindung anhand von Beispielen verdeutlicht werden.

Zur Durchführung der Beispiele wurden folgende Einsatzstoffe verwendet:
Polyol 1:
   Glycerin gestartetes Polyoxypropylenpolyoxyethylen mit einem Polyoxyethylenanteil, bezogen auf den Gehalt an Alkylenoxyd, von 73 Gew.-%, einer Hydroxylzahl von 42 und einem Anteil primärer Hydroxylgruppen von größer 75%.
Polyol 2:
   Glycerin gestartetes Polyoxypropylenpolyoxyethylen mit einem Polyoxyethylenanteil, bezogen auf den Gehalt an Alkylenoxyd, von 10 Gew.-%, einer Hydroxylzahl von 48 und einem Anteil primärer Hydroxylgruppen von 5%.
Polyol 3:
   Glycerin gestartetes Polyoxypropylenpolyoxyethylen mit einem Polyoxyethylenanteil, bezogen auf den Gehalt an Alkylenoxyd, von 14 Gew.-%, einer Hydroxylzahl von 48 und einem Anteil primärer Hydroxylgruppen von größer 80%.
Polyol 4:
   Glycerin gestartetes Polyoxypropylen mit einem Polyoxypropylenanteil, bezogen auf den Gehalt an Alkylenoxyd, von 100 Gew.-%, einer Hydroxylzahl von 42 Glycerin gestartetes Polyoxypropylenpolyoxyethylen mit einem Polyoxyethylenanteil, und einem Anteil primärer Hydroxylgruppen von 0%.

Iso 1 (Prepolymer):
   54,5 Gew.-Teile 4,4'-MDI, 21,4 Gew.-Teile 2,4' MDI und 24,1 Gew.-Teile höherkernige Homologe des MDI wurden mit 6,5 Gew.-Teilen Polyol 1 und 12,5 Gew.-Teilen Polyol 4 zum Isocyanatprepolymer umgesetzt. Der NCO-Gehalt betrug 25,6%
Iso 2
   Mischung, enthaltend 54,5 Gew.-Teile 4,4'-MDI, 21,4 Gew.-Teile 2,4' MDI und 24,1 Gew.-Teile höherkernige Homologe des MDI. Der NCO-Gehalt betrug 32,8%
Iso 3
   Mischung, enthaltend 48 Gew.-Teile 4,4'-MDI, 40 Gew.-Teile 2,4' MDI und 12 Gew.-Teile höherkernige Homologe des MDI. Der NCO-Gehalt betrug 33,2%
Iso 4 (Prepolymer):
   46 Gew.-Teile 4,4-MDI, 10 Gew.-Teile 2,4' MDI und 25 Gew.-Teile höherkernige Homologe des MDI wurden mit 2,0 Gew.-Teilen Polyol 1 und 10,0 Gew.-Teilen Polyol 4 zum Isocyanatprepolymer umgesetzt. Der NCO-Gehalt betrug 28,3%

Katalysator I:
   Aminkatalysator Dabco® 33LV der Firma Air Products
Katalysator II:
   Aminkatalysator Jeffcat ZF 10 der Firma Huntsman
Stabilisator:
Dabco® DC198 der Firma Air Products

Die Polyurethanschaumstoffe wurden erhalten, indem man 77,15 Gew.-Teile Polyol 1, 16,0 Gew.-Teile Polyol 2, 2,0 Gew.-Teile Polyol 3, 1,5 Gew.-Teile Stabilisator, 0,2 Gew.-Teile Katalysator I, 0,15 Gew.-Teile Katalysator II und 3,0 Gew.-Teile Wasser zu einer Polyolkomponente vermischte und diese mit dem in Tabelle 1 angegebenen Isocyanat zu einer Reaktionsmischung vermischte und die Reaktionsmischung in einer Form (40 cm x 40 cm x 10 cm) zu Polyurethanweichschaumstoff aushärtete. Die mechanischen Eigenschaften der erhaltenen Schaumstoffe sind in Tabelle 1 angegeben:

**Tabelle 1**

| Mechanische Kennwerte | | V 1 (*Iso 2,* Index 70) | | Beispiel 1 (Iso 1, Index 75) | | Beispiel 2 (Iso 1, Index 70) | V 2 (*Iso 2,* Index 70) | V 3 (*Iso 3,* Index 70) |
|---|---|---|---|---|---|---|---|---|
| | | | | | | | | |
| Eindruckhärte 25% | [N] | - | 32 | - | 48 | 41 | | |
| Eindruckhärte 40% | [N] | - | 44 | - | 65 | 56 | | |
| Eindruckhärte 65% | [N] | - | 79 | - | 114 | 101 | | |
| Stauchhärte 25% | [kPa] | 0.7 | 0.7 | 1.0 | 1.1 | 0.9 | | |
| Stauchhärte 40% | [kPa] | 0.9 | 0.8 | 1.2 | 1.3 | 1.1 | | |
| Stauchhärte 65% | [kPa] | 1.7 | 1.6 | 2.3 | 2.5 | 2.2 | | |
| Hysteresis 70% | [%] | 13.9 | 14.3 | 12.5 | 12.1 | 13.0 | | |
| Kerndichte | [g/L] | 49.1 | 49.8 | 49.6 | 51.8 | 47.2 | | |
| Druckverformungsrest 50% | [%] | 1.3 | 1.4 | 1.3 | 2.1 | 2.0 | | |
| Druckverformungsrest 75% | [%] | 1.4 | 2.2 | 1.9 | 2.6 | 2.7 | | |
| Druckverformungsrest 90% | [%] | 1.8 | 2.3 | 2.4 | 3.3 | 3.5 | | |
| Zugfestigkeit | [kPa] | 54 | 53 | 34 | 45 | 42 | | |
| Bruchdehnung | [%] | 185 | 186 | 124 | 123 | 139 | | |
| Weiterreissfestigkeit | [N/mm] | 0.31 | 0.29 | 0.20 | 0.21 | 0.25 | | |
| Wet Compression Set (22h/50°C/95 % rel. Luftfeuchte/30% Stauchung) | [%] | 0.9 | 1.1 | 0.9 | 0.9 | 0.4 | | |
| Klebrigkeit | | stark | stark | Nein | Nein | nein | stark | |
| | | | | | | | | Kollaps |
| MDA-Messung Oberfläche 4,4'-MDA | | | | <1ppm | | | <1ppm | Kollaps |
| 2,4'-MDA | | | | <1ppm | | | 11ppm | |
| MDA-Messung* aus dem Innern des Schaums 4,4'-MDA | | | | <1ppm | | | <1ppm | |
| 2,4'-MDA | | | | <1ppm | | | <1ppm | |

| | | | | | | | | |
|---|---|---|---|---|---|---|---|---|
| *Untersuchung der Proben auf 2,4' und 4,4' MDA über Extraktion mit Essigsäure mit Hilfe der HPLC (6 x 2 Proben zu 3 x 3 x 0,5 cm für Doppelbestimmung Oberfläche= jeweils 3 x 3 x 3 cm Würfel) im Innern des Schaums Chromatographische Bedingungen für die HPLC: Software: Empower3 Version 7.00.00.00 Geräte: PM.-Nr.: E-LC-10, E-LC-13 Säule: 235 (Nucleosil 100-5-C18 AB) Fließmittel A: ACN : Wasser (10:90) mit 1,3 g Ammoniumcarbamat/L Fließmittel B: ACN : Wasser (90:10) mit 0,2 g Ammoniumcarbamat/L 1 min. 90% Fließmittel A 10% Fließmittel B, bis 30min. der Wechsel nach 100% Fließmittel B, bis 35min der Wechsel nach 90% Fließmittel A 10% Fließmittel B Wellenlänge: 240 nm Analysenzeit: 40 min Durchfluß: 0,8 mL/min Injektionsvolumen: 50µL | | | | | | | | |

Dabei wurden die Werte folgendermaßen bestimmt:
Eindruckhärte gemäß DIN EN ISO 2369 bei den jeweils angegebenen Stauchungen, Stauchhärte und Hysterese gemäß DIN EN ISO 3386 Druckverformungsrest gemäß DIN EN ISO 1856 Der Gehalt an 2,4'-MDA und 4,4'-MDA wurde auf Prüfkörpern von der Oberfläche und aus dem Innern des Schaumstoffs durch Extraktion mit Essigsäure und anschließender chromatographischer Bestimmung mittels HPLC ermittelt. Zur Bestimmung an der Oberfläche wurde eine 0,5 cm dicke Schicht von der Schaumstoffoberfläche abgeschnitten und daraus anschließendPrüfkörper von 3 x 3 cm geschnitten. Zur Bestimmung aus dem Innern des Schaumstoffs wurden in der Schaumstoffmitte Prüfkörper in Würfelform von 3cm x 3cm x 3 cm ausgeschnitten.

Die Prüfkörper wurden in einem Erlenmeyerkolben 4 mal in jeweils 10 ml Essigsäure 20 mal gestampft. Die Essigsäure wurde vereinigt und auf 50 ml aufgefüllt. Anschließend wurde der MDA-Gehalt wie oben beschrieben chromatographisch (HPLC) bestimmt. In Tabelle 1 ist der so ermittelte Gehalt an 4,4' MDA und 2,4'-MDA angegeben. Die Chromatoraphische Bestimmung erfolgte dabei wie folgt:
Software: Empower3 Version 7.00.00.00
Geräte: PM.-Nr.: E-LC-10, E-LC-13
Säule: 235 (Nucleosil 100-5-C18 AB)
Fließmittel A: ACN : Wasser (10:90) mit 1,3 g Ammoniumcarbamat/L
Fließmittel B: ACN : Wasser (90:10) mit 0,2 g Ammoniumcarbamat/L
1 min. 90% Fließmittel A 10% Fließmittel B, bis 30min. der Wechsel nach 100% Fließmittel B, bis 35min
der Wechsel nach 90% Fließmittel A 10% Fließmittel B
Wellenlänge: 240 nm
Analysenzeit: 40 min
Durchfluß: 0,8 mL/min
Injektionsvolumen: 50µL

Die Klebrigkeit wurde an einem Polyurethanformkissen gemäß der Beispiele mit den Maßen 40 x 40 x 10 cm (L x B x H) gemessen. Dabei wurde ein Aluminium-Teller mit einem Durchmesser von 200 mm bis zum Auftreten einer Kraft von 4N in die Probe eingedrückt und anschließend mit einer Geschwindigkeit von 15 mm/min wieder aus dem Schaum herausgefahren. Bei starker Klebrigkeit haftete der Schaumstoff auch 5 Sekunden nach dem Herausfahren noch mit einer Kraft von mindestens 10 N an den Aluminiumteller.

## Patentansprüche

1. Verfahren zur Herstellung von Polyurethanweichschaumstoffen bei dem man
a) Polyisocyanatprepolymer mit
b) polymeren Verbindungen mit gegenüber Isocyanaten reaktiven Gruppen,
c) gegebenenfalls Kettenverlängerungs- und/oder Vernetzungsmittel,
d) Katalysator,
e) Treibmittel, enthaltend Wasser sowie
f) gegebenenfalls Zusatzstoffen
zu einer Reaktionsmischung vermischt und zum Polyurethanweichschaumstoff umsetzt,
wobei die Polyisocyanatprepolymere (a) einen NCO-Gehalt von 16 bis 30 Gew.-%, bezogen auf das Gesamtgewicht der Komponente a), aufweist und erhältlich sind durch Umsetzen von
a1) Diphenylmethandiisocyanat, enthaltend a1a) 2,4' Diphenylmethandiisocyanat,
a1b) 4,4'-Diphenylmethandiisocyanat und a1c) höherkernigen Homologen des Diphenylmethandiisocyanats, mit
a2) Polyolen, enthaltend
a2a) ethylenoxidreiches Polyalkylenoxid mit einer Hydroxylzahl von 20 bis 60 mg KOH/g, ausgehend von einem oder mehreren 2 bis 4 funktionalen Startermolekülen und einem Anteil von Ethylenoxideinheiten, bezogen auf das Gesamtgewicht an Alkylenoxideinheiten, von mindestens 55 Gew.-% und
a2b) ethylenoxidarmes Polyalkylenoxid mit einer Hydroxylzahl von 20 bis 60 mg KOH/g, ausgehend von einem oder mehreren 2 bis 4 funktionalen Startermolekülen und einem Anteil von Ethylenoxideinheiten, bezogen auf das Gesamtgewicht an Alkylenoxideinheiten, von höchstens 20 Gew.-% und
wobei der Anteil von a1a) 2,4'-Diphenylmethandiisocyanat 5 bis 15 Gew.-% und von a1b) 4,4'-Diphenylmethandiisocyanat 40 bis 80 Gew.-%, bezogen auf das Gesamtgewicht der Polyisocyanate a1), beträgt
und die polymeren Verbindungen mit gegenüber Isocyanaten reaktiven Gruppen (b)
b1) 60 bis 80 Gew.-% mindestens eines Polyalkylenoxids mit einer Hydroxylzahl von 20 bis 60 mg KOH/g, ausgehend von einem oder mehreren 2 bis 4 funktionalen Startermolekülen und einem Anteil von Ethylenoxideinheiten, bezogen auf das Gesamtgewicht an Alkylenoxideinheiten, von 55 bis 95 Gew.-%,
b2) 20 bis 30 Gew.-% mindestens eines Polyalkylenoxids mit einer Hydroxylzahl von 20 bis 80 mg KOH/g, ausgehend von einem oder mehreren 2 bis 4-funktionellen Startermolekülen und einem Anteil von Ethylenoxideinheiten, bezogen auf das Gesamtgewicht an Alkylenoxideinheiten, von 0 bis 40 Gew.-%
enthalten und
wobei der Anteil der Verbindungen b1) und b2), bezogen auf das Gesamtgewicht der polymeren Verbindungen mit gegenüber Isocyanaten reaktiven Gruppen (b), mindestens 80 Gew.-% beträgt.

2. Verfahren nach Anspruch 1, **dadurch gekennzeichnet, dass** das a1) Diphenylmethandiisocyanat von 5 bis 15 Gew.-% a1a) 2,4-Diphenylmethandiisocyanat, 40 bis 70 Gew.-% 4,4'-Diphenylmethandiisocyanat und von 10 bis 30 Gew.-% a1c) höherkernigen Homologen des Diphenylmethandiisocyanats enthält, jeweils bezogen auf das Gesamtgewicht der Komponente a1).

3. Verfahren nach Anspruch 1 oder 2, **dadurch gekennzeichnet, dass** der Anteil von (a2a) ethylenoxidreichem Polyalkylenoxyd 4 bis 8 Gew.-% und der Anteil von (a2b) ethylenoxidarmem Polyalkenlenoxid 10 bis 16 Gew.-%, jeweils bezogen auf das Gesamtgewicht des Isocyanatprepolymers a), beträgt.

4. Verfahren nach einem der Ansprüche 1 bis 3, **dadurch gekennzeichnet, dass** das Polyalkylenoxid (a2a) einen Anteil an primären OH-Gruppen von 70 bis 100 %, bezogen auf die Gesamtzahl der OH-Gruppen des Polyalkylenoxids (a2b) und das Polyalkylenoxid (a2) einen Anteil an primären OH-Gruppen von 30 bis 0 %, bezogen auf die Gesamtzahl der OH-Gruppen des Polyalkylenoxids a2) aufweist.

5. Verfahren nach einem der Ansprüche 1 bis 4, **dadurch gekennzeichnet, dass** das Polyalkylenoxid b1) einen Anteil an primären OH-Gruppen von 70 bis 100 %, bezogen auf die Gesamtzahl der OH-Gruppen des Polyalkylenoxids b1) und das Polyalkylenoxid b2) einen Anteil an primären OH-Gruppen von 30 bis 0 %, bezogen auf die Gesamtzahl der OH-Gruppen des Polyalkylenoxids b2) aufweist.

6. Verfahren nach einem der Ansprüche 1 bis 5, **dadurch gekennzeichnet, dass** die Umsetzung der Reaktionsmischung zum Polyurethanweichschaumstoff bei einem Isocyanatindex von 55 bis 105 erfolgt.

7. Verfahren nach einem der Ansprüche 1 bis 6, **dadurch gekennzeichnet, dass** der Polyurethanweichschaumstoff in einer geschlossenen Form hergestellt wird.

8. Verfahren nach einem der Ansprüche 1 bis 7, **dadurch gekennzeichnet, dass** der Polyurethanweichschaumstoff eine Dichte von 20 bis 70 g/L aufweist.

9. Verfahren nach einem der Ansprüche 1 bis 8, **dadurch gekennzeichnet, dass** der Polyurethanweichschaumstoff eine Eindruckhärte bei 40 %, gemessen nach Din EN ISO 2439, Verfahren A, von kleiner 70 N aufweist.

10. Polyurethanweichschaumstoff, erhältlich nach einem Verfahren gemäß einem der Ansprüche 1 bis 9.

11. Polyurethanweichschaumstoff nach Anspruch 10, **dadurch gekennzeichnet, dass** der extrahierbare Gehalt an aromatischen Aminen in einem Probekörper aus der Oberfläche mit 3 cm x 3 cm und 0,5 cm Dicke in 50 ml Essigsäure kleiner als 1 ppm ist.

## Claims

1. A process for producing flexible polyurethane foams, in which
a) polyisocyanate prepolymer is mixed with
b) polymeric compounds having groups reactive toward isocyanates,
c) optionally chain extenders and/or crosslinkers,
d) catalyst,
e) blowing agent comprising water and
f) optionally additives
to give a reaction mixture and reacted to give the flexible polyurethane foam,
wherein the polyisocyanate prepolymers (a) have an NCO content of from 16 to 30% by weight, based on the total weight of the component a), and are obtainable by reacting
a1) diphenylmethane diisocyanate comprising a1a) diphenylmethane 2,4'-diisocyanate, a1b) diphenylmethane 4,4'-diisocyanate and a1c) higher homologues of diphenylmethane diisocyanate having more than two rings with
a2) polyols comprising
a2a) ethylene-oxide-rich polyalkylene oxide having a hydroxyl number of from 20 to 60 mg KOH/g derived from one or more bifunctional to tetrafunctional starter molecules and a proportion of ethylene oxide units, based on the total weight of alkylene oxide units, of at least 55% by weight and
a2b) low-ethylene oxide polyalkylene oxide having a hydroxyl number of from 20 to 60 mg KOH/g derived from one or more bifunctional to tetrafunctional starter molecules and a proportion of ethylene oxide units, based on the total weight of alkylene oxide units, of not more than 20% by weight
and
where the proportion of a1a) diphenylmethane 2,4'-diisocyanate is from 5 to 15% by weight and that of a1b) diphenylmethane 4,4'-diisocyanate is from 40 to 80% by weight, based on the total weight of the polyisocyanates a1),
and the polymeric compounds (b) having groups which are reactive toward isocyanates comprise
b1) from 60 to 80% by weight of at least one polyalkylene oxide having a hydroxyl number of from 20 to 60 mg KOH/g derived from one or more bifunctional to tetrafunctional starter molecules and a proportion of ethylene oxide units, based on the total weight of alkylene oxide units, of from 55 to 95% by weight,
b2) from 20 to 30% by weight of at least one polyalkylene oxide having a hydroxyl number of from 20 to 80 mg KOH/g derived from one or more bifunctional to tetrafunctional starter molecules and a proportion of ethylene oxide units, based on the total weight of alkylene oxide units, of from 0 to 40% by weight
and
where the proportion of the compounds b1) and b2), based on the total weight of the polymeric compounds (b) having groups which are reactive toward isocyanates, is at least 80% by weight.

2. The process according to claim 1, wherein the a1) diphenylmethane diisocyanate comprises from 5 to 15% by weight of a1a) diphenylmethane 2,4-diisocyanate, from 40 to 70% by weight of diphenylmethane 4,4'-diisocyanate and from 10 to 30% by weight of a1c) higher homologues of diphenylmethane diisocyanate having more than two rings, in each case based on the total of the component a1).

3. The process according to claim 1 or 2, wherein the proportion of (a2a) ethylene oxide-rich polyalkylene oxide is from 4 to 8% by weight and the proportion of (a2b) low-ethylene oxide polyalkylene oxide is from 10 to 16% by weight, in each case based on the total weight of the isocyanate prepolymer a).

4. The process according to any of claims 1 to 3, wherein the polyalkylene oxide (a2a) has a porportiom of primary OH groups of from 70 to 100%, based on the total number of OH groups of the polyalkylene oxide (a2b), and the polyalkylene oxide (a2) has a proportion of primary OH groups of from 30 to 0%, based on the total number of OH groups of the polyalkylene oxide a2) .

5. The process according to any of claims 1 to 4, wherein the polyalkylene oxide b1) has a proportion of primary OH groups of from 70 to 100%, based on the total number of OH groups of the polyalkylene oxide b1), and the polyalkylene oxide b2) has a proportion of primary OH groups of from 30 to 0%, based on the total number of OH groups of the polyalkylene oxide b2).

6. The process according to any of claims 1 to 5, wherein the reaction of the reaction mixture to give the flexible polyurethane foam is carried out at an isocyanate index of from 55 to 105.

7. The process according to any of claims 1 to 6, wherein the flexible polyurethane foam is produced in a closed mold.

8. The process according to any of claims 1 to 7, wherein the flexible polyurethane foam has a density of from 20 to 70 g/l.

9. The process according to any of claims 1 to 8, wherein the flexible polyurethane foam has an indentation hardness at 40%, measured in accordance with DIN EN ISO 2439, method A, of less than 70N.

10. A flexible polyurethane foam obtainable by a process according to any of claims 1 to 9.

11. The flexible polyurethane foam according to claim 10, wherein the extractable content of aromatic amines in a test specimen from the surface having dimensions of 3 cm x 3 cm and a thickness of 0.5 cm in 50 ml of acetic acid is less than 1 ppm.

## Revendications

1. Procédé pour la préparation de mousses souples de polyuréthane dans lequel on mélange
a) un prépolymère de polyisocyanate avec
b) des composés polymériques dotés de groupes réactifs envers des isocyanates
c) éventuellement des agents d'extension de chaîne et/ou des agents de réticulation,
d) un catalyseur,
e) un propulseur, contenant de l'eau ainsi que
f) éventuellement des adjuvants
pour donner un mélange réactionnel qu'on transforme en une mousse souple de polyuréthane,
les prépolymères de polyisocyanate (a) présentant une teneur en NCO de 16 à 30 % en poids par rapport au poids total du composant a) et pouvant être obtenus par la transformation de
a1) diisocyanate de diphénylméthane, contenant a1a) du 2,4'-diisocyanate de diphénylméthane, a1b) du 4,4'-diisocyanate de diphénylméthane et a1c) des homologues du diisocyanate de diphénylméthane dotés de plus de noyaux, avec
a2) des polyols, contenant
a2a) un poly(oxyde d'alkylène) riche en oxyde d'éthylène doté d'un indice d'hydroxyle de 20 à 60 mg de KOH/g, à partir d'une ou plusieurs molécules de départ fonctionnalisées 2 à 4 fois et d'une proportion de motifs oxyde d'éthylène, par rapport au poids total des motifs oxyde d'alkylène, d'au moins 55 % en poids et
a2b) un poly(oxyde d'alkylène) pauvre en oxyde d'éthylène doté d'un indice d'hydroxyle de 20 à 60 mg de KOH/g, à partir d'une ou plusieurs molécules de départ fonctionnalisées 2 à 4 fois et d'une proportion de motifs oxyde d'éthylène, par rapport au poids total des motifs oxyde d'alkylène, d'au plus 20 % en poids
et
la proportion de a1a) 2,4'-diisocyanate de diphénylméthane étant de 5 à 15 % en poids et la proportion de a1b) 4,4'-diisocyanate de diphénylméthane étant de 40 à 80 % en poids, par rapport au poids total des polyisocyanates a1),
et les composés polymériques (b) dotés de groupes réactifs envers des isocyanates contenant
b1) 60 à 80 % en poids d'au moins un poly(oxyde d'alkylène) doté d'un indice d'hydroxyle de 20 à 60 mg de KOH/g, à partir d'une ou plusieurs molécules de départ fonctionnalisées 2 à 4 fois et d'une proportion de motifs oxyde d'éthylène, par rapport au poids total des motifs oxyde d'alkylène, de 55 à 95 % en poids,
b2) 20 à 30 % en poids d'au moins un poly(oxyde d'alkylène) doté d'un indice d'hydroxyle de 20 à 80 mg de KOH/g, à partir d'une ou plusieurs molécules de départ fonctionnalisées 2 à 4 fois et d'une proportion de motifs oxyde d'éthylène, par rapport au poids total des motifs oxyde d'alkylène, de 0 à 40 % en poids
et
la proportion des composés b1) et b2), par rapport au poids total des composés polymériques (b) dotés de groupes réactifs envers des isocyanates, étant d'au moins 80 % en poids.

2. Procédé selon la revendication 1, **caractérisé en ce que** le a1) diisocyanate de diphénylméthane contient de 5 à 15 % en poids de a1a) 2,4-diisocyanate de diphénylméthane, 40 à 70 % en poids de 4,4'-diisocyanate de diphénylméthane et de 10 à 30 % en poids de a1c) homologues du diisocyanate de diphénylméthane dotés de plus de noyaux, à chaque fois par rapport au poids total du composant a1).

3. Procédé selon la revendication 1 ou 2, **caractérisé en ce que** la proportion de (a2a) poly(oxyde d'alkylène) riche en oxyde d'éthylène est de 4 à 8 % en poids et la proportion de (a2b) poly(oxyde d'alkylène) pauvre en oxyde d'éthylène est de 10 à 16 % en poids, à chaque fois par rapport au poids total du prépolymère d'isocyanate a).

4. Procédé selon l'une quelconque des revendications 1 à 3, **caractérisé en ce que** le poly(oxyde d'alkylène) (a2a) présente une proportion de groupes OH primaire de 70 à 100 %, par rapport au nombre total de groupes OH du poly(oxyde d'alkylène) (a2b) et le poly(oxyde d'alkylène) (a2) présente une proportion de groupes OH primaire de 30 à 0 %, par rapport au nombre total de groupes OH du poly(oxyde d'alkylène) a2).

5. Procédé selon l'une quelconque des revendications 1 à 4, **caractérisé en ce que** le poly(oxyde d'alkylène) b1) présente une proportion de groupes OH primaire de 70 à 100 %, par rapport au nombre total de groupes OH du poly(oxyde d'alkylène) b1) et le poly(oxyde d'alkylène) b2) présente une proportion de groupes OH primaire de 30 à 0 %, par rapport au nombre total de groupes OH du poly(oxyde d'alkylène) b2).

6. Procédé selon l'une quelconque des revendications 1 à 5, **caractérisé en ce que** la transformation du mélange réactionnel en mousse souple de polyuréthane est réalisée à un indice d'isocyanate de 55 à 105.

7. Procédé selon l'une quelconque des revendications 1 à 6, **caractérisé en ce que** la mousse souple de polyuréthane est préparée dans un moule fermé.

8. Procédé selon l'une quelconque des revendications 1 à 7, **caractérisé en ce que** la mousse souple de polyuréthane présente une densité de 20 à 70 g/L.

9. Procédé selon l'une quelconque des revendications 1 à 8, **caractérisé en ce que** la mousse souple de polyuréthane présente une dureté par indentation à 40 %, mesurée d'après la norme DIN EN ISO 2439, méthode A, inférieure à 70 N.

10. Mousse souple de polyuréthane, pouvant être obtenue par un procédé selon une quelconque des revendications 1 à 9.

11. Mousse souple de polyuréthane selon la revendication 10, **caractérisée en ce que** la teneur d'amines aromatiques dans une éprouvette extractible de la surface de 3 cm x 3 cm et d'une épaisseur de 0,5 cm dans 50 ml d'acide acétique est inférieure à 1 ppm.
